# EUROPÄISCHE PATENTSCHRIFT

(11) **EP 1 116 107 B1**
(45) Veröffentlichungstag und Bekanntmachung des Hinweises auf die Patenterteilung: **26.03.2003**
(21) Anmeldenummer: 99955716.8
(22) Anmeldetag: 15.09.1999
(51) Int. Cl.: G06F 9/44

(54) **VERFAHREN ZUR AUSFÜHRUNG EINZELNER ALGORITHMEN MITTELS EINER REKONFIGURIERBAREN SCHALTUNG UND VORRICHTUNG ZUR DURCHFÜHRUNG EINES SOLCHEN VERFAHRENS**
METHOD FOR EXECUTING INDIVIDUAL ALGORITHMS BY MEANS OF A RECONFIGURABLE CIRCUIT AND DEVICE FOR CARRYING OUT SUCH A METHOD
PROCEDE PERMETTANT D'EXECUTER DIFFERENTS ALGORITHMES A L'AIDE D'UN CIRCUIT RECONFIGURABLE ET DISPOSITIF PERMETTANT D'EXECUTER UN TEL PROCEDE

(30) Priorität: 30.09.1998 DE 19844969
(43) Veröffentlichungstag der Anmeldung: 18.07.2001
(73) Patentinhaber: Infineon Technologies AG, 81669 München (DE)
(72) Erfinder: BUCHENRIEDER, Klaus, D-85521 Riemerling (DE); KRESS, Rainer, D-85604 Pöring (DE)
(74) Vertreter: Jannig, Peter, Dipl.-Ing.
(86) Internationale Anmeldenummer: DE9902936
(87) Internationale Veröffentlichungsnummer: WO00019313

(56) Entgegenhaltungen:
- JEAN J ET AL: "Dynamic reconfiguration to support concurrent applications" PROCEEDINGS. IEEE SYMPOSIUM ON FPGAS FOR CUSTOM COMPUTING MACHINES (CAT. NO.98TB100251), PROCEEDINGS IEEE SYMPOSIUM ON FPGAS FOR CUSTOM COMPUTING MACHINES, NAPA VALLEY, CA, USA, 15-17 APRIL 1998, Seiten 302-303, XP002135307 1998, Los Alamitos, CA, USA, IEEE Comput. Soc, USA ISBN: 0-8186-8900-5
- DIESSEL O ET AL: "Partial rearrangements of space-shared FPGAs" PARALLEL AND DISTRIBUTED PROCESSING. 10 IPPS/SPDP '98 WORKSHOPS HELD IN CONJUNCTION WITH THE 12TH INTERNATIONAL PARALLEL PROCESSING SYMPOSIUM AND 9TH SYMPOSIUM ON PARALLEL AND DISTRIBUTED PROCESSING. PROCEEDINGS, PARALLEL AND DISTRIBUTED AND PROCESSI, 30. März 1998 (1998-03-30), Seiten 913-918, XP000901704 1998, Berlin, Germany, Springer-Verlag, Germany ISBN: 3-540-64359-1
- BURNS J ET AL: "A dynamic reconfiguration run-time system" PROCEEDINGS. THE 5TH ANNUAL IEEE SYMPOSIUM ON FIELD-PROGRAMMABLE CUSTOM COMPUTING MACHINES (CAT. NO.97TB100186), PROCEEDINGS. THE 5TH ANNUAL IEEE SYMPOSIUM ON FIELD-PROGRAMMABLE CUSTOM COMPUTING MACHINES CAT. NO.97TB100186), NAPA VALLEY, CA, USA, 16-, Seiten 66-75, XP002135308 1997, Los Alamitos, CA, USA, IEEE Comput. Soc, USA ISBN: 0-8186-8159-4
- MCKAY N ET AL: "Dynamic specialisation of XC6200 FPGAs by partial evaluation" PROCEEDINGS. IEEE SYMPOSIUM ON FPGAS FOR CUSTOM COMPUTING MACHINES (CAT. NO.98TB100251), PROCEEDINGS IEEE SYMPOSIUM ON FPGAS FOR CUSTOM COMPUTING MACHINES, NAPA VALLEY, CA, USA, 15-17 APRIL 1998, Seiten 308-309, XP002135309 1998, Los Alamitos, CA, USA, IEEE Comput. Soc, USA ISBN: 0-8186-8900-5

## Beschreibung

Die Erfindung betrifft Verfahren zur Ausführung einzelner Algorithmen mittels einer rekonfigurlerbaren Schaltung gemäß dem Oberbegriff des Patentanspruchs 1 und eine Vorrichtung zur Durchführung eines solchen Verfahrens gemäß dem Oberbegriff des Patentanspruchs 4.

Eine solche rekonfigurierbare Schaltung ist aus Jean J. et al.: "Dynamic Reconfiguration to Support Concurrent Applications "; Proceedings IEEE Symposium on FPGAs for Custom Computing Machines, NAPA Valley, CA, USA, 15-17 April 1998, Seiten 302-303, bekannt.

Rekonfigurierbare Schaltungen sind in ihrer Größe und damit ihren Ressourcen begrenzt. Oftmals reichen die Ressourcen einer solchen Schaltung nicht aus, um zwei oder mehrere Algorithmen gleichzeitig oder einen einzelnen größeren Algorithmus auszuführen.

Ein größerer Algorithmus, der mehr Ressourcen benötigt, als in der rekonfigurierbaren Schaltung vorhanden sind und der mit dieser Schaltung allein ausgeführt werden soll, wird im allgemeinen in mehrere Teilalgorithmen zerlegt, deren jeder selbst wieder je einen Algorithmus darstellt und so gewählt ist, daß die Schaltung ausreichend Ressourcen zur Ausführung dieses Teilalgorithmus aufweist.

Diese Teilalgorithmen werden in der Schaltung zeitlich nacheinander ausgeführt, derart, daß jeder dieser Teilalgorithmen mit der für diesen Teilalgorithmus konfigurierten Schaltung ausgeführt wird und daß nach der Ausführung eines Teilalgorithmus ein nächstfolgender Teilalgorithmus ausgeführt wird, wobei die Schaltung nach der Ausführung dieses einen Teilalgorithmus für diesen nächstfolgenden Teilalgorithmus umkonfiguriert wird, soweit dieser nächstfolgende Teilalgorithmus verschieden von diesem einen Teilalgorithmus ist.

Durch datenabhängige Verzweigungen wird erst zur Laufzeit, d.h. während der eigentlichen Ausführung bzw. Abarbeitung des größeren Algorithmus bekannt, welcher dieser Teilalgorithmen des größeren Algorithmus wirklich benötigt wird. Zur Kompilezeit, d.h. vor der Laufzeit, ist kein Hinweis darauf vorhanden, welche Teilalgorithmen und damit Konfigurationen der Schaltung wirklich benötigt werden.

Ein Weg, den größeren Algorithmus dennoch mit der dafür zu wenig Ressourcen aufweisenden rekonfigurierbaren Schaltung auszuführen, besteht darin, diese Schaltung beispielsweise entsprechend einem vorgegebenen Programmfluß für alle Teilalgorithmen des größeren Algorithmus nacheinander einzeln zu konfigurieren. Dabei werden nur die konfigurierten Teilalgorithmen ausgeführt, die gebraucht werden. Wird ein Teilalgorithmus nicht gebraucht, wird die Konfiguration dieses Teilalgorithmus ohne Ausführung dieses Teilalgorithmus gelöscht.

Das Konfigurieren der Schaltung während der Laufzeit für einen nicht gebrauchten Teil des größeren Algorithmus kostet wertvolle Ausführungszeit. Es wird also ein Verfahren benötigt, das während der Ausführung frühzeitig die notwendigen Konfigurationen erkennt und lädt.

Aus M. Vasilko und Djamel Ait-Boudaoud: "Architectural Synthesis Techniques for Dynamically Reconfigurable Logic" in Reiner W. Hartenstein, Manfred Glesner (Eds.): "Field-Programmable Logic, Smart Applications, New Paradigms and Compilers", 6^{th} International Workshop on Field-Programmable Logic and Applications, FPL '96, Darmstadt, Germany, September 23-25, 1996, Proceedings, Springer-Verlag, S 290-296 ist es bekannt, die Reihenfolge, nach der die einzelnen Teilalgorithmen eines größeren Algorithmus in einer Schaltung konfiguriert werden, zur Kompilezeit zu berechnen. Dabei wird ein Rekonfigurationskontroller erhalten, bei dem der Ablauf, nach dem die Teilalgorithmen konfiguriert werden, fest ist. Dabei wird das Ergebnis einer Verzweigung benötigt, um den richtigen Teilalgorithmus zu bestimmen, der zu konfigurieren ist.

Der Erfindung liegt die Aufgabe zugrunde, aufzuzeigen, wie bei einem Verfahren zur Ausführung einzelner Algorithmen mittels einer rekonfigurierbaren Schaltung, die ausreichend Ressourcen zur Ausführung jedes einzelnen Algorithmus aufweist, und bei dem die auszuführenden Algorithmen in der Schaltung zeitlich nacheinander konfiguriert und ausgeführt werden, die Ausführungszeit verkürzt werden kann.

Diese Aufgabe wird durch das im Anspruch 1 angegebene Verfahren und durch die im Anspruch 4 angegebene Vorrichtung gelöst.

Danach wird vorteilhafterweise bereits während der Laufzeit eines Algorithmus der nächstfolgende Algorithmus in der Schaltung konfiguriert und kann u.U. schon während der Laufzeit des einen Algorithmus zu arbeiten beginnen. Voraussetzung dafür ist allerdings eine Schaltung, die derart dynamisch konfigurierbar ist. Geeignet dafür sind bestimmte Produkte der Firma Xilinx, z.B. der Baustein XC62xx, welche die grundlegenden Möglichkeiten für eine derartige dynamische Konfiguration bereits bieten. Eine Konfiguration der Bausteine kann wie das Beschreiben eines Speichers erfolgen. Eine Konfigurationsspeicherzelle wird adressiert und anschließend beschrieben. Der Baustein kann demnach während der Laufzeit konfiguriert werden.

Das erfindungsgemäße Verfahren hat im Gegensatz zu dem oben angegebenen bekannten Verfahren, bei dem die Reihenfolge der Konfiguration der einzelnen Teilalgorithmen eines größeren Algorithmus zur Kompilezeit berechnet wird und das ein statisches Verfahren ist, den Vorteil, daß früher auf einen Algorithmus geschlossen werden kann, der zu einem bestimmten Algorithmus als nächstfolgender Algorithmus auszuführen ist, wodurch die Parallelität zwischen Konfiguration und Berechnung und damit die Systemperformance erhöht, insbesondere die Ausführungszeit verkürzt wird.

Bei diesem Verfahren kann die Schaltung nach der Ausführung eines Algorithmus für einen nächstfolgenden Algorithmus konfiguriert werden und/oder sie kann während der Ausführung eines Algorithmus für einen nächstfolgenden Algorithmus konfiguriert, d.h. dynamisch konfiguriert werden.

Unabhängig davon, ob eine Schaltung nach oder während der Ausführung eines Algorithmus für den nächstfolgenden Algorithmus konfiguriert wird, ist dieses Verfahren selbst ein dynamisches Verfahren, da der nächstfolgende Algorithmus nicht feststeht, sondern nach einer Wahrscheinlichkeit bestimmt wird.

Bei dem Verfahren sind wenigstens einem bestimmten Algorithmus wenigstens zwei Algorithmen zugeordnet, deren jeder mit je einer anderen bestimmten Wahrscheinlichkeit dafür in Frage kommt, während und/oder nach der Ausführung dieses bestimmten Algorithmus als nächstfolgender Algorithmus ausgeführt zu werden, und daß von diesen zugeordneten Algorithmen derjenige als der nächstfolgende Algorithmus tatsächlich ausgeführt wird, der die größte Wahrscheinlichkeit aufweist. Dies bedeutet, daß die Wahrscheinlichkeit jedes dieser zugeordneten Algorithmen nicht für alle diese Algorithmen gleich sein darf, und daß es unter diesen Algorithmen einen einzelnen Algorithmus mit einer relativ größten Wahrscheinlichkeit gibt.

Die unterschiedlichen Wahrscheinlichkeiten der verschiedenen zugeordneten Algorithmen müssen bei diesem Verfahren als zusätzliche Information bekannt sein. Ohne diese zusätzliche Information beträgt bei zwei Algorithmen, die jeweils einem bestimmten Algorithmus zugeordnet sind, die Wahrscheinlichkeit, während und/oder nach der Ausführung dieses bestimmten Algorithmus als nächstfolgender Algorithmus ausgeführt zu werden, jeweils 50%, so daß ohne diese Information keine sichere Entscheidung getroffen werden kann.

Zur Gewinnung der zusätzlichen Information wird vorzugs- und vorteilhafterweise so vorgegangen, daß für jeden Algorithmus, der einem bestimmten Algorithmus zugeordnet ist und dafür in Frage kommt, während und/oder nach einer Ausführung dieses bestimmten Algorithmus als nächstfolgender Algorithmus ausgeführt zu werden, ermittelt wird, wie oft im Vergleich zu jedem der anderen zugeordneten Algorithmen dieser eine zugeordnete Algorithmus in der Vergangenheit während und/oder nach Ausführung dieses bestimmten Algorithmus als nächstfolgender Algorithmus ausgeführt worden ist, wobei derjenige der zugeordneten Algorithmen, der in dieser Vergangenheit vergleichsweise am öftesten ausgeführt worden ist, die größte Wahrscheinlichkeit dafür aufweist, während und/oder nach der jetzigen Ausführung des bestimmten Algorithmus als nächstfolgender Algorithmus ausgeführt zu werden.

Bei diesem Verfahren wird aus Entscheidungen der Vergangenheit in die Zukunft extrapoliert. Hat eine bestimmter Algorithmus beispielsweise zwei zugeordnete Algorithmen, die dafür in Frage kommen, während und/oder nach Ausführung dieses bestimmten Algorithmus als nächstfolgender Algorithmus ausgeführt zu werden, und wurde in der nahen Vergangenheit der eine zugeordnete Algorithmus häufiger als nächstfolgender Algorithmus ausgewählt, so ist davon auszugehen, daß dieser zugeordnete Algorithmus mit größerer Wahrscheinlichkeit benötigt wird. Somit können durch Extrapolation in die Zukunft die Fehlentscheidungen reduziert werden. Wahrscheinlichkeit soll hier so verstanden werden, daß es sicher ist, daß ein zugeordneter Algorithmus häufiger vorkommt.

Dieses Verfahren kann vorteilhafterweise so ausgeführt werden, daß jedem Algorithmus, der einem bestimmten Algorithmus zugeordnet ist und dafür in Frage kommt, während und/oder nach einer Ausführung dieses bestimmten Algorithmus als nächstfolgender Algorithmus ausgeführt zu werden, je eine sich ändernde Zahl zugeordnet wird, die einen für alle diese zugeordneten Algorithmen gleichen Anfangswert einnimmt, solange dieser zugeordnete Algorithmus noch nicht als ein nächstfolgender Algorithmus zu diesem bestimmten Algorithmus ausgeführt worden ist, wobei die Zahl eines zugeordneten Algorithmus um einen bestimmten Betrag in Richtung zu einem bestimmten, für alle diese zugeordneten Algorithmen gleichen Extremwert dieser Zahl geändert wird, wenn dieser zugeordnete Algorithmus als nächstfolgender Algorithmus zu dem bestimmten Algorithmus ausgeführt wird, während gleichzeitig die Zahl jedes anderen zugeordneten Algorithmus, der nicht als nächstfolgender Algorithmus zu dem bestimmten Algorithmus ausgeführt wird, um einen bestimmten Betrag in Richtung vom Extremwert fort geändert wird, wobei der zugeordnete Algorithmus, dessen Zahl als erste den Extremwert erreicht, die größte Wahrscheinlichkeit dafür aufweist, während und/oder nach der jetzigen Ausführung des bestimmten Algorithmus als nächstfolgender Algorithmus ausgeführt zu werden.

Bei einer bevorzugten und vorteilhaften Vorrichtung zur Durchführung dieses Verfahrens ist jedem Algorithmus, der einem bestimmten Algorithmus zugeordnet ist und dafür in Frage kommt, während und/oder nach einer Ausführung dieses bestimmten Algorithmus als nächstfolgender Algorithmus ausgeführt zu werden, je ein Vorwärts/Rückwärts-Zähler zugeordnet, wobei in jedem Zähler ein die Zahl seines zugeordneten Algorithmus darstellender Zählerstand auf den Anfangswert dieser Zahl eingestellt ist, solange dieser zugeordnete Algorithmus noch nicht als ein nächstfolgender Algorithmus zu dem bestimmten Algorithmus ausgeführt worden ist, wobei die Zähler so gesteuert sind, daß
- der Zählerstand eines Zählers um den bestimmten Betrag in Richtung zum bestimmten Extremwert dieses Zählerstandes geändert wird, wenn der zugeordnete Algorithmus dieses Zählers als nächstfolgender Algorithmus zu dem bestimmten Algorithmus ausgeführt wird, während gleichzeitig der Zählerstand jedes anderen Zählers, dessen zugeordneter Algorithmus nicht als nächstfolgender Algorithmus zu dem bestimmten Algorithmus ausgeführt wird, um den bestimmten Betrag in Richtung vom Extremwert fort geändert wird, wobei
- der zugeordnete Algorithmus, dessen Zähler als erster den Extremwert erreicht, die größte Wahrscheinlichkeit dafür aufweist, während und/oder nach der jetzigen Ausführung des bestimmten Algorithmus als nächstfolgender Algorithmus ausgeführt zu werden.

Vorteilhafterweise ermöglicht die Erfindung eine Zeitersparnis bei der Konfiguration in dynamisch rekonfigurierbaren Systemen. Es können ähnliche Techniken bei der Realisierung angewandt werden wie bei einer Sprungvorhersageeinheit (Branch Prediction) von Prozessoren.

Die Erfindung wird in der nachfolgenden Beschreibung anhand der Figuren beispielhaft näher erläutert. Es zeigen:
- Figur 1: schematisch eine rekonfigurierbare Schaltung, die zeitlich nacheinander für verschiedene auszuführende Algorithmen zu konfigurieren ist, wobei ein Algorithmus, auf den von einem Algorithmus ein Pfeil zeigt, während oder nach der Ausführung des letztgenannten Algorithmus auszuführen ist, und
- Figur 2: ein Blockschaltbild einer Vorrichtung zum Ermitteln eines Algorithmus mit der größten Wahrscheinlichkeit, als ein nächstfolgender Algorithmus ausgeführt zu werden.

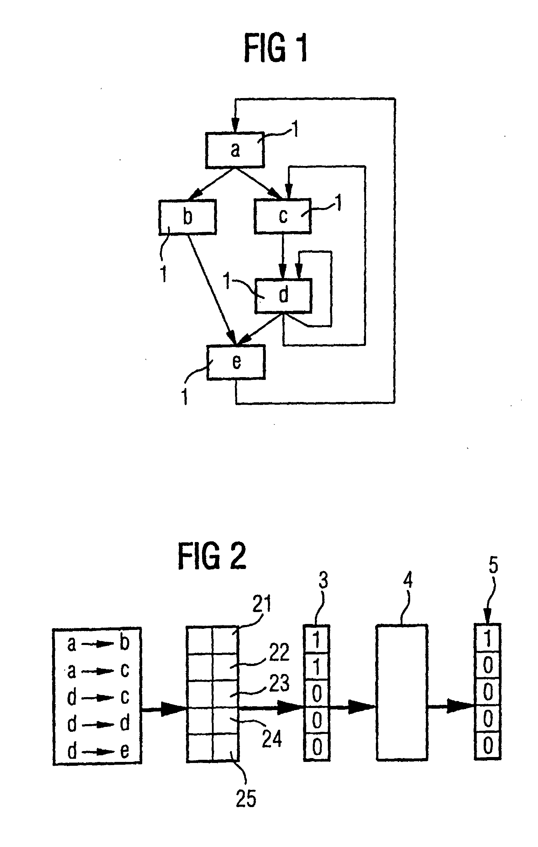

In der Figur 1 ist eine rekonfigurierbare Schaltung symbolisch durch ein mit 1 bezeichnetes rechteckiges Kästchen dargestellt. Die Schaltung 1 kann zur Ausführung eines Algorithmus konfiguriert und zur Ausführung eines anderen Algorithmus umkonfiguriert werden.

Zur Abarbeitung jedes solchen Algorithmus muß die Schaltung 1 ausreichend Ressourcen aufweisen. Ist ein Algorithmus größer, so daß die Ressourcen der Schaltung 1 zur Ausführung dieses Algorithmus nicht ausreichen, kann so vorgegangen werden, daß dieser größere Algorithmus so in kleinere Teilalgorithmen aufgeteilt wird, daß die Ressourcen der Schaltung 1 zur Ausführung jedes dieser Teilalgorithmen ausreichen, und daß diese Teilalgorithmen nacheinander abgearbeitet werden.

Ist beispielsweise ein Teilalgorithmus abgearbeitet, kann die Konfiguration für diesen Algorithmus in der Schaltung 1 verworfen und in der Schaltung 1 die Konfiguration für einen nächsten Teilalgorithmus implementiert werden. Die Zwischenergebnisse der Berechnung können in der Schaltung 1 in der Schaltung und/oder in externen Speichern gehalten werden, um damit die Berechnung fortzusetzen. Dadurch können große Algorithmen auf einer relativ kleinen rekonfigurierbaren Schaltung 1 beispielsweise in Form eines FPGA (Feld-Programmierbares Gate Array) abgearbeitet werden.

Für die Laufzeit des größeren Algorithmus ist es günstig, wenn während der Ausführung eines Teilalgorithmus ein nicht mehr benötigter Teil der Konfiguration für diesen Teilalgorithmus in der Schaltung 1 bereits für einen nachfolgenden anderen Teilalgorithmus umkonfiguriert wird, während ein anderer Teil der Konfiguration für den einen Teilalgorithmus noch an diesem Algorithmus rechnet. Durch diese Parallelisierung wird ein Geschwindigkeitsvorteil erreicht.

Meist ist der auf die aktuelle Berechnung eines bestimmten Teilalgorithmus nächstfolgende Teilalgorithmus des größeren Algorithmus abhängig von der aktuellen Berechnung. Dies gilt insbesondere in dem Fall, daß dem bestimmten Teilalgorithmus zwei Teilalgorithmen zugeordnet sind, deren jeder in Abhängigkeit von der aktuellen Berechnung als der nächstfolgende Teilalgorithmus in Frage kommt. Dadurch kann der nächstfolgende Teilalgorithmus erst spät, nämlich nach der Berechnung der Bedingung dafür, welcher der beiden zugeordneten Teilalgorithmen als nächstfolgender Teilalgorithmus auszuführen ist, bestimmt werden.

Um Zeit zu sparen kann beispielsweise so vorgegangen werden, daß von zwei oder mehreren Teilalgorithmen, die einem bestimmten Teilalgorithmus zugeordnet sind und deren jeder als nächstfolgender Teilalgorithmus in Frage kommt, zufällig einer als der auszuführende nächstfolgende Teilalgorithmus gewählt wird. Ist dies der richtige nächstfolgende Teilalgorithmus, wird Zeit zur Konfiguration der Schaltung 1 für diesen Algorithmus gespart. Ist es der falsche, so muß die Entscheidung korrigiert werden, d.h. die bisherige Konfiguration wird verworfen und eine neue Konfiguration der Schaltung 1 gestartet. Bei zwei möglichen nächstfolgenden Teilalgorithmen ist die Chance 50%, daß der richtige konfiguriert wird. Die vorliegende Erfindung stellt eine Möglichkeit bereit diese Wahrscheinlichkeit zu erhöhen.

Anhand der Figur 1 sei dies näher erläutert, die einen Ablaufplan einer dynamischen Konfiguration zeigt, bei der in ein und derselben Schaltung 1 nacheinander beispielsweise maximal fünf Algorithmen a, b, c, d und e ausgeführt werden, für die Schaltung 1 jeweils zu konfigurieren ist.

In diesem Ablaufplan sind alle vorkommenden Algorithmen a bis e aufgelistet und mit Pfeilen ist sichtbar gemacht, welche dieser Algorithmen a bis e unmittelbar aufeinanderfolgend auszuführen sind.

Die Algorithmen a bis e können beispielsweise Teilalgorithmen eines größeren auszuführenden Algorithmus sein.

Die für einen auszuführenden Algorithmus konfigurierte Schaltung 1 ist in der Figur 1 so dargestellt, daß der Buchstabe, mit dem dieser Algorithmus bezeichnet ist, in das Kästchen dieser Schaltung eingetragen ist.

Die Abarbeitung der fünf Algorithmen a bis e kann prinzipiell mit jedem dieser Algorithmen beginnen. Es sei beispielsweise angenommen, daß die Abarbeitung mit dem Algorithmus a beginnt.

Gemäß der Figur 1 zeigt von der für diesen Algorithmus a konfigurierten Schaltung 1 ein Pfeil zu der für den Algorithmus b konfigurierten Schaltung 1 und ein anderer Pfeil zu der für den Algorithmus c konfigurierten Schaltung 1. Dies bedeutet, daß der Algorithmus a ein bestimmter Algorithmus ist, dem zwei Algorithmen, hier die Algorithmen b und c zugeordnet sind, deren jeder mit je einer anderen bestimmten Wahrscheinlichkeit dafür in Frage kommt, während und/oder nach der Ausführung dieses Algorithmus a als nächstfolgender Algorithmus ausgeführt zu werden.

Ähnliches gilt für die für den Algorithmus d konfigurierten Schaltung 1. Von dieser Schaltung 1 zeigt ein Pfeil zu der für den Algorithmus c konfigurierten Schaltung 1, ein anderer Pfeil zu der für den Algorithmus d konfigurierten Schaltung 1 selbst und ein weiterer Pfeil zu der für den Algorithmus e konfigurierten Schaltung 1. Dies bedeutet, daß der Algorithmus d ein bestimmter Algorithmus ist, dem drei Algorithmen, hier die Algorithmen c, d und e zugeordnet sind, deren jeder mit je einer anderen bestimmten Wahrscheinlichkeit dafür in Frage kommt, während und/oder nach der Ausführung dieses Algorithmus d als nächstfolgender Algorithmus ausgeführt zu werden.

Von der für den Algorithmus b konfigurierten Schaltung 1 zeigt ein einziger Pfeil zu der für den Algorithmus e konfigurierten Schaltung 1. Dies bedeutet, daß während und/oder nach der Ausführung des Algorithmus b nur der Algorithmus e als nächstfolgender Algorithmus ausgeführt wird. Gleiches gilt für die Algorithmen c und e, d.h. während und/oder nach der Ausführung des Algorithmus c wird nur der Algorithmus d und während und/oder nach der Ausführung des Algorithmus e nur der Algorithmus a als nächstfolgender Algorithmus ausgeführt, da vom Algorithmus c nur ein Pfeil zum Algorithmus d und vom Algorithmus e nur ein Pfeil zum Algorithmus a weist.

Für jeden der beiden gemeinsam dem Algorithmus a zugeordneten Algorithmen b und c wird ermittelt, wie oft dieser zugeordnete Algorithmus b oder c im Vergleich zum anderen zugeordneten anderen Algorithmus c bzw. b in der Vergangenheit während und/oder nach Ausführung des Algorithmus a als ein nächstfolgender Algorithmus ausgeführt worden ist. Derjenige dieser beiden zugeordneten Algorithmen b, c, der in dieser Vergangenheit vergleichsweise am öftesten ausgeführt worden ist, weist die größte Wahrscheinlichkeit dafür auf, während und/oder nach der jetzigen Ausführung des bestimmten Algorithmus a als nächstfolgender Algorithmus ausgeführt zu werden.

Ähnlich wird für jeden der drei gemeinsam dem Algorithmus d zugeordneten Algorithmen c, d, e, ermittelt, wie oft dieser zugeordnete Algorithmus c oder d oder e im Vergleich zu jedem der anderen zugeordneten Algorithmen d, e bzw. c, e bzw. c, d in der Vergangenheit während und/oder nach Ausführung des Algorithmus d als ein nächstfolgender Algorithmus ausgeführt worden ist. Derjenige dieser drei zugeordneten Algorithmen c, d und e, der in dieser Vergangenheit vergleichsweise am öftesten ausgeführt worden ist, weist die größte Wahrscheinlichkeit dafür auf, während und/oder nach der jetzigen Ausführung des Algorithmus d als nächstfolgender Algorithmus ausgeführt zu werden.

Jedem Algorithmus b, c bzw. c, d, e, der dem bestimmten Algorithmus a bzw. d zugeordnet ist und dafür in Frage kommt, während und/oder nach einer Ausführung dieses bestimmten Algorithmus a bzw. d als nächstfolgender Algorithmus ausgeführt zu werden, wird je eine sich ändernde Zahl x zugeordnet, die einen für alle diese zugeordneten Algorithmen b, c bzw. c, d, e gleichen Anfangswert x0 einnimmt, solange dieser zugeordnete Algorithmus b oder c bzw. c oder d oder e noch nicht als ein nächstfolgender Algorithmus zu diesem bestimmten Algorithmus a bzw. d ausgeführt worden ist.

Die Zahl x eines zugeordneten Algorithmus b oder c bzw. c oder d oder e wird um einen bestimmten Betrag Δx in Richtung (+) zu einem bestimmten, für alle diese zugeordneten Algorithmen b, c bzw. c, d, e gleichen Extremwert x1 dieser Zahl x geändert, wenn dieser zugeordnete Algorithmus b oder c bzw. c oder d oder e als nächstfolgender Algorithmus zu dem bestimmten Algorithmus a bzw. d ausgeführt wird, während gleichzeitig die Zahl x jedes anderen zugeordneten Algorithmus b oder c bzw. d, e oder c, e oder c, d, der nicht als nächstfolgender Algorithmus zu dem bestimmten Algorithmus a bzw. d ausgeführt wird, um den bestimmten Betrag Δx in Richtung (-) vom Extremwert x1 fort geändert wird.

Der zugeordnete Algorithmus b oder c bzw. c oder d oder e, dessen Zahl x als erste den Extremwert x1 erreicht, weist die größte Wahrscheinlichkeit dafür auf, während und/oder nach der jetzigen Ausführung des bestimmten Algorithmus a bzw. d als nächstfolgender Algorithmus ausgeführt zu werden.

In der Figur 2 ist eine Vorrichtung zur Durchführung dieses Verfahrens dargestellt.

Bei dieser Vorrichtung ist jedem Algorithmus, der einem bestimmten Algorithmus zugeordnet ist und dafür in Frage kommt, während und/oder nach einer Ausführung dieses bestimmten Algorithmus als nächstfolgender Algorithmus ausgeführt zu werden, je ein Vorwärts/Rückwärts-Zähler 21, 22, 23, 24 bzw. 25 zugeordnet.

Der Zähler 21 ist dem bestimmten Algorithmus a und dem zugeordneten Algorithmus b, symbolisiert durch a → b, der Zähler 22 dem bestimmten Algorithmus a und dem zugeordneten Algorithmus c, symbolisiert durch a → c, der Zähler 23 dem anderen bestimmten Algorithmus d und dem zugeordneten Algorithmus c, symbolisiert durch d → c, der Zähler 24 dem anderen bestimmten Algorithmus d und dem zugeordneten identischen Algorithmus d, symbolisiert durch d → d, und der Zähler 25 dem anderen bestimmten Algorithmus d und dem zugeordneten Algorithmus e, symbolisiert durch d → e, zugeordnet.

In jedem Zähler 21, 22, 23, 24 bzw. 25 ist ein die Zahl x seines zugeordneten Algorithmus b, c, c, d, e darstellender Zählerstand auf den Anfangswert x0 dieser Zahl x eingestellt, solange dieser zugeordnete Algorithmus b, c, c, d, e noch nicht als ein nächstfolgender Algorithmus zu dem bestimmten Algorithmus a oder d ausgeführt worden ist.

Die Zähler 21 bis 25 sind so gesteuert, daß der Zählerstand x eines Zählers 21, 22, 23, 24 oder 25 um den bestimmten Betrag Δx in Richtung + zum bestimmten Extremwert x1 dieses Zählerstandes x geändert wird, wenn der zugeordnete Algorithmus b, c, c, d bzw. e dieses Zählers 21, 22, 23, 24 bzw. 25 als nächstfolgender Algorithmus zu dem bestimmten Algorithmus a oder d ausgeführt wird, während gleichzeitig der Zählerstand x jedes anderen Zählers 22 bis 25, 21 und 23 bis 25, ... bzw. 21 bis 24, dessen zugeordnetet Algorithmus b, c; c, d bzw. e nicht als nächstfolgender Algorithmus zu dem bestimmten Algorithmus a oder d ausgeführt wird, um den bestimmten Betrag Δx in Richtung - vom Extremwert x1 fort geändert wird.

Der zugeordnete Algorithmus b, c, c, d, e, dessen Zähler als erster den Extremwert x1 erreicht, weist die größte Wahrscheinlichkeit dafür auf, während und/oder nach der jetzigen Ausführung des bestimmten Algorithmus a oder d als nächstfolgender Algorithmus ausgeführt zu werden.

Beispielsweise ist jeder Zähler 21, 22, 23, 24 oder 25 ein 2-Bit-Zähler, der beispielsweise auf den Anfangswert x0 = 00 eingestellt ist, solange der zugeordnete Algorithmus b, c, c, d bzw. e noch nicht als ein nächstfolgender Algorithmus zu dem bestimmten Algorithmus a oder d ausgeführt worden ist.

Die Zahl x kann neben dem Anfangswert x0 = 00 die Werte x = 01, x = 10 und x = 11 annehmen, wobei x = 11 = x1 den Extremwert bildet, der hier ein Maximalwert ist.

Jedesmal wenn beispielsweise zum bestimmten Algorithmus a ein zugeordneter Algorithmus b oder c als nächstfolgender Algorithmus ausgewählt wird, erhöht sich in dem diesem Algorithmus b oder c zugeordneten Zähler 21 bzw. 22 der Zählerstand x um den Betrag Δx = 1, während sich gleichzeitig der Zählerstand x im Zähler 22 bzw. 21, der dem anderen nicht ausgewählten Algorithmus c bzw. b zugeordnet ist, um den Betrag Δx = 1 erniedrigt.

Jedesmal wenn zum bestimmten Algorithmus b ein zugeordneter Algorithmus c oder d oder e als nächstfolgender Algorithmus ausgewählt wird, erhöht sich in dem diesem Algorithmus c oder d oder e zugeordneten Zähler 23 bzw. 24 bzw. 25 der Zählerstand x um den Betrag Δx = 1, während sich gleichzeitig der Zählerstand x in den Zählern 24, 25 bzw. 23, 25 bzw. 23, 24, die den anderen nicht ausgewählten Algorithmen d, e bzw. c, e bzw. c, d zugeordnet sind, jeweils um den Betrag Δx = 1 erniedrigt.

Erhöhung des Betrags Δx bedeutet hier in jedem Fall Änderung des Betrags Δx in Richtung + und Erniedrigung des Betrags Δx bedeutet Änderung des Betrags Δx in Richtung -.

Ist in einem Zähler der Extremwert x1 erreicht und wird der ihm zugeordnete Algorithmus erneut als nächstfolgender Algorithmus ausgewählt, wird der Extremwert x1 beibehalten. Analog wird nach Erreichen des Anfangswertes x0 in einem Zähler dieser Wert beibehalten, auch wenn der ihm zugeordnete Algorithmus erneut nicht ausgewählt wird.

Um für einen bestimmten Algorithmus a oder d den zugeordneten Algorithmus b oder c bzw. c oder d oder e zu ermitteln, der die größte Wahrscheinlichkeit aufweist, als der zu diesem bestimmten Algorithmus a oder b nächstfolgende Algorithmus tatsächlich ausgeführt zu werden, ist es zweckmäßig, ein Maskenregister 3 zu verwenden, in welchem jedem Zähler 21 bis 25 je eine Stelle zugeordnet ist, und in welchem jede Stelle, die einem dem bestimmten Algorithmus a bzw. d zugeordneten Zähler 21 und 22 bzw. 23 und 24 und 25 zugeordnet ist, jeweils auf einen Wert, beispielsweise 1 gesetzt wird, der einen Zugriff auf die Zählerstände x nur dieser Zähler 21 und 22 bzw. 23 und 24 und 25 ermöglicht. Gleichzeitig werden alle Stellen, die jedem anderen bestimmten Algorithmus d bzw. a zugeordnet sind, auf einen anderen Wert, beispielsweise 0, gesetzt, der einen Zugriff auf die Zählerstände x der diesem anderen bestimmten Algorithmus d bzw. a zugeordneten Zähler 23 und 24 und 25 bzw. 21 und 22 sperrt.

Ein Maximalwertfinder 4 sucht den Extremwert x1 bei allen Zählern 21 und 22 bzw. 23 und 24 und 25, bei welchen die Stellen des Maskenregisters 3 mit dem einen Wert, beispielsweise 1, besetzt ist. Bei dem Extremwert x1, oder bei Zählergleichstand bei den Extremwerten x1, wird vom Maximalwertfinder 4 ein Wert, in eine dem betreffenden Zähler 21 und/oder 22 bzw. 23 und/oder 24 und/oder 25 zugeordnete Stelle eines Ergebnisregisters 5 gesetzt, der den Extremwert x1 anzeigt. Zu diesem bestimmten Algorithmus a bzw. d wird der zugeordnete Algorithmus b oder c bzw. c oder d oder e als der nächstfolgende Algorithmus ausgewählt, bei dessen Stelle im Ergebnisregister 5 der den Extremwert x1 anzeigende Wert zum erstenmal erscheint.

Nach Figur 2 ist der den Extremwert x1 anzeigende Wert gleich 1 und es ist beispielsweise die oberste Stelle des Ergebnisregisters 5 mit diesem Wert 1 besetzt. Dies bedeutet speziell, daß in bezug auf den bestimmten Algorithmus a der zugeordnete Algorithmus b und nicht der zugeordnete Algorithmus c als der nächstfolgende Algorithmus ausgewählt wird.

Auf diese Weise kann frühzeitig schon der wahrscheinlichste nächstfolgende Algorithmus ausgewählt werden, ohne daß die Entscheidung im Programmablauf schon berechnet sein muß. Sollte der falsche nächstfolgende Algorithmus ausgewählt worden sein, so wird sofort nach Berechnung der Entscheidung im Programmablauf der Konfigurationsvorgang abgebrochen und der andere und richtige nächstfolgende Algorithmus geladen.

## Patentansprüche

1. Verfahren zur Ausführung einzelner Algorithmen (a, b, c, d, e) mittels einer rekonfigurierbaren Schaltung (1), die ausreichend Ressourcen zur Ausführung jedes einzelnen Algorithmus aufweist,
- wobei die auszuführenden Algorithmen in der Schaltung zeitlich nacheinander ausgeführt werden,
- wobei die Schaltung während und/oder nach der Ausführung eines Algorithmus für einen danach auszuführenden Algorithmus umkonfiguriert wird, zumindest soweit der danach auszuführende Algorithmus verschieden von dem gerade ausgeführten Algorithmus ist, und
- wobei dann, wenn nach der Ausführung des gerade ausgeführten Algorithmus verschiedene Algorithmen auszuführen sein können, die Schaltung für denjenigen Algorithmus umkonfiguriert wird, der mit der größten Wahrscheinlichkeit nach dem gerade ausgeführten Algorithmus auszuführen sein wird,
**dadurch gekennzeichnet,**
- **daß** für jeden der verschiedenen Algorithmen, die nach einem bestimmten Algorithmus auszuführen sein können, ermittelt wird, wie oft der jeweilige Algorithmus in der Vergangenheit nach der Ausführung des bestimmten Algorithmus ausgeführt worden ist, und
- **daß** die Schaltung für denjenigen Algorithmus umkonfiguriert wird, der in der Vergangenheit nach der Ausführung des bestimmten Algorithmus am häufigsten ausgeführt worden ist.

2. Verfahren nach Anspruch 1,
**dadurch gekennzeichnet,**
**daß** bei der während der Ausführung des gerade ausgeführten Algorithmus erfolgenden Umstrukturierung der Schaltung (1) für die Ausführung des danach auszuführenden Algorithmus Teile der Schaltung, die für die Ausführung des gerade ausgeführten Algorithmus konfiguriert wurden, umkonfiguriert werden.

3. Verfahren nach Anspruch 1 oder 2,
**dadurch gekennzeichnet,**
- **daß** jedem der verschiedenen Algorithmen, die nach einem bestimmten Algorithmus auszuführen sein können, eine Zahl (x) zugeordnet wird, wobei diese Zahl jeweils
- einen bestimmten Anfangswert (x0) aufweist,
- um einen bestimmten Wert (+Δx) verändert wird, wenn der Algorithmus, dem die betreffende Zahl zugeordnet ist, nach der Ausführung des bestimmten Algorithmus ausgeführt wird, und
- um einen bestimmten anderen Wert (-Δx) verändert wird, wenn der Algorithmus, dem die betreffende Zahl zugeordnet ist, nach der Ausführung des bestimmten Algorithmus nicht ausgeführt wird.

4. Vorrichtung zur Ausführung einzelner Algorithmen (a, b, c, d, e) mittels einer rekonfigurierbaren Schaltung (1), die ausreichend Ressourcen zur Ausführung jedes einzelnen Algorithmus aufweist,
- wobei die auszuführenden Algorithmen in der Schaltung zeitlich nacheinander ausgeführt werden,
- wobei die Schaltung während und/oder nach der Ausführung eines Algorithmus für einen danach auszuführenden Algorithmus umkonfiguriert wird, zumindest soweit der danach auszuführende Algorithmus verschieden von dem gerade ausgeführten Algorithmus ist, und
- wobei dann, wenn nach der Ausführung des gerade ausgeführten Algorithmus verschiedene Algorithmen auszuführen sein können, die Schaltung für denjenigen Algorithmus umkonfiguriert wird, der mit der größten Wahrscheinlichkeit nach dem gerade ausgeführten Algorithmus auszuführen sein wird,
**dadurch gekennzeichnet,**
- **daß** für jeden der verschiedenen Algorithmen, die nach einem bestimmten Algorithmus auszuführen sein können, ermittelt wird, wie oft der jeweilige Algorithmus in der Vergangenheit nach der Ausführung des bestimmten Algorithmus ausgeführt worden ist, und
- **daß** die Schaltung für denjenigen Algorithmus umkonfiguriert wird, der in der Vergangenheit nach der Ausführung des bestimmten Algorithmus am häufigsten ausgeführt worden ist.

5. Vorrichtung nach Anspruch 4,
**dadurch gekennzeichnet,**
**daß** bei der während der Ausführung des gerade ausgeführten Algorithmus erfolgenden Umstrukturierung der Schaltung (1) für die Ausführung des danach auszuführenden Algorithmus Teile der Schaltung, die für die Ausführung des gerade ausgeführten Algorithmus konfiguriert wurden, umkonfiguriert werden.

6. Vorrichtung nach Anspruch 4 oder 5,
**dadurch gekennzeichnet,**
- **daß** jedem der verschiedenen Algorithmen, die nach einem bestimmten Algorithmus auszuführen sein können, eine Zahl (x) zugeordnet wird, wobei diese Zahl jeweils
- einen bestimmten Anfangswert (x0) aufweist,
- um einen bestimmten Wert (+Δx) verändert wird, wenn der Algorithmus, dem die betreffende Zahl zugeordnet ist, nach der Ausführung des bestimmten Algorithmus ausgeführt wird, und
- um einen bestimmten anderen Wert (-Δx) verändert wird, wenn der Algorithmus, dem die betreffende Zahl zugeordnet ist, nach der Ausführung des bestimmten Algorithmus nicht ausgeführt wird.

7. Vorrichtung nach Anspruch 6,
**dadurch gekennzeichnet,**
**daß** die Veränderung der Zahl (x) durch vorwärts oder rückwärts zählende Zähler (21, 22, 23, 24, 25) erfolgt.

8. Vorrichtung nach Anspruch 7,
**dadurch gekennzeichnet,**
**daß** die Zähler (21, 22, 23, 24, 25) die Zahl (x) nur erhöhen, wenn sie kleiner als ein bestimmter Maximalwert ist.

9. Vorrichtung nach Anspruch 7 oder 8,
**dadurch gekennzeichnet,**
**daß** die Zähler (21, 22, 23, 24, 25) die Zahl (x) nur verringern, wenn sie größer als ein bestimmter Minimalwert ist.

## Claims

1. Method for executing individual algorithms (a, b, c, d, e) by means of a reconfigurable circuit (1) which has sufficient resources to execute each individual algorithm,
- with the algorithms to be executed being executed successively in time in the circuit,
- with the circuit being reconfigured during and/or after executing an algorithm for an algorithm which is to be executed subsequently, at least to the extent that the algorithm to be executed subsequently differs from the algorithm which has just been executed or is currently being executed, and
- when different algorithms may need to be executed after executing the algorithm which has just been executed or is currently being executed, with the circuit being reconfigured for that algorithm which will most probably need to be executed after the algorithm which has just been executed or is currently being executed,
**characterized**
- **in that**, for each of the various algorithms which may need to be executed after a specific algorithm, the method determines how often the respective algorithm has been executed in the past after executing the specific algorithm, and
- **in that** the circuit is reconfigured for that algorithm which was executed most frequently in the past after executing the specific algorithm.

2. Method according to Claim 1,
**characterized**
**in that**, during the restructuring of the circuit (1) during the execution of the algorithm which has just been executed or is currently being executed, in order to execute the algorithm which is to be executed after this, parts of the circuit which have been configured for executing the algorithm which has just been executed or is currently being executed are reconfigured.

3. Method according to Claim 1 or 2,
**characterized**
- **in that** each of the various algorithms which may need to be executed after a specific algorithm is allocated a number (x), with this number in each case
- having a specific initial value (x0),
- being changed by a specific value (+Δx) when the algorithm to which the relevant number is allocated is executed after executing the specific algorithm, and
- being changed by a specific different value (-Δx) when the algorithm to which the relevant number is allocated is not executed after executing the specific algorithm.

4. Apparatus for executing individual algorithms (a, b, c, d, e) by means of a reconfigurable circuit (1) which has sufficient resources for executing each individual algorithm,
- with the algorithms to be executed being executed successively in time in the circuit,
- with the circuit being reconfigured during and/or after executing an algorithm for an algorithm which is to be executed subsequently, at least to the extent that the algorithm to be executed subsequently differs from the algorithm which has just been executed or is currently being executed, and
- when different algorithms may need to be executed after executing the algorithm which has just been executed or is currently being executed, with the circuit being reconfigured for that algorithm which will most probably need to be executed after the algorithm which has just been executed or is currently being executed,
**characterized**
- **in that**, for each of the various algorithms which may need to be executed after a specific algorithm, it is determined how often the respective algorithm has been executed in the past after executing the specific algorithm, and
- **in that** the circuit is reconfigured for that algorithm which was executed most frequently in the past after executing the specific algorithm.

5. Apparatus according to Claim 4,
**characterized**
**in that**, during the restructuring of the circuit (1) during the execution of the algorithm which has just been executed or is currently being executed, in order to execute the algorithm which is to be executed after this, parts of the circuit which have been configured for executing the algorithm which has just been executed or is currently being executed are reconfigured.

6. Apparatus according to Claim 4 or 5,
**characterized**
- **in that** each of the various algorithms which may need to be executed after a specific algorithm is allocated a number (x), with this number in each case
- having a specific initial value (x0),
- being changed by a specific value (+Δx) when the algorithm to which the relevant number is allocated is executed after executing the specific algorithm, and
- being changed by a specific different value (-Δx) when the algorithm to which the relevant number is allocated is not executed after executing the specific algorithm.

7. Apparatus according to Claim 6,
**characterized**
**in that** the number (x) is changed by forward or backward counting counters (21, 22, 23, 24, 25).

8. Apparatus according to Claim 7,
**characterized**
**in that** the counters (21, 22, 23, 24, 25) increase the number (x) only when it is less than a specific maximum value.

9. Apparatus according to Claim 7 or 8,
**characterized**
**in that** the counters (21, 22, 23, 24, 25) reduce the number (x) only when it is greater than a specific minimum value.

## Revendications

1. Procédé pour exécuter des algorithmes individuels (a, b, c, d, e) au moyen d'un circuit reconfigurable (1) qui possède suffisamment de ressources pour exécuter chacun des algorithmes individuels
- les algorithmes à exécuter dans le circuit étant exécutés l'un après l'autre,
- le circuit étant reconfiguré pendant et/ou après l'exécution d'un algorithme pour un algorithme à exécuter après celui-ci, au moins dans la mesure où l'algorithme à exécuter après est différent de l'algorithme en cours d'exécution, et
- lorsque différents algorithmes peuvent être exécutés après l'exécution de l'algorithme en cours d'exécution, le circuit étant reconfiguré pour l'algorithme qui présente le plus fort taux de probabilité d'être exécuté après l'algorithme en cours d'exécution,
**caractérisé en ce**
- **que** pour chacun des différents algorithmes qui peuvent être exécutés après un algorithme donné, on détermine à quelle fréquence l'algorithme correspondant a été exécuté par le passé après l'exécution de l'algorithme donné, et
- **que** le circuit est reconfiguré pour l'algorithme qui, dans le passé, a été exécuté le plus souvent après l'exécution de l'algorithme en cours d'exécution.

2. Procédé selon la revendication 1, **caractérisé en ce que** lors de la restructuration du circuit (1) effectuée pendant l'exécution de l'algorithme en cours d'exécution en vue de l'exécution du prochain algorithme à exécuter, des parties du circuit qui ont été configurées pour l'exécution de l'algorithme en cours d'exécution sont reconfigurées.

3. Procédé selon la revendication 1 ou 2, **caractérisé en ce**
- **qu'**un nombre (x) est affecté à chacun des différents algorithmes qui peuvent être exécutés après un algorithme donné, ce nombre
- présentant à chaque fois une valeur initiale (x0) donnée,
- étant modifié d'une valeur donnée (+Δx) lorsque l'algorithme auquel est affecté le nombre concerné est exécuté après l'exécution de l'algorithme donné, et
- étant modifié d'une valeur donnée (-Δx) lorsque l'algorithme auquel est affecté le nombre concerné n'est pas exécuté après l'exécution de l'algorithme donné.

4. Dispositif pour exécuter des algorithmes individuels (a, b, c, d, e) au moyen d'un circuit reconfigurable (1) qui possède suffisamment de ressources pour exécuter chacun des algorithmes individuels
- les algorithmes à exécuter dans le circuit étant exécutés l'un après l'autre,
- le circuit étant reconfiguré pendant et/ou après l'exécution d'un algorithme pour un algorithme à exécuter après celui-ci, au moins dans la mesure où l'algorithme à exécuter après est différent de l'algorithme en cours d'exécution, et
- lorsque différents algorithmes peuvent être exécutés après l'exécution de l'algorithme en cours d'exécution, le circuit étant reconfiguré pour l'algorithme qui présente le plus fort taux de probabilité d'être exécuté après l'algorithme en cours d'exécution,
**caractérisé en ce**
- **que** pour chacun des différents algorithmes qui peuvent être exécutés après un algorithme donné, on détermine à quelle fréquence l'algorithme correspondant a été exécuté par le passé après l'exécution de l'algorithme donné, et
- **que** le circuit est reconfiguré pour l'algorithme qui, dans le passé, a été exécuté le plus souvent après l'exécution de l'algorithme en cours d'exécution.

5. Dispositif selon la revendication 4, **caractérisé en ce que** lors de la restructuration du circuit (1) effectuée pendant l'exécution de l'algorithme en cours d'exécution en vue de l'exécution du prochain algorithme à exécuter, des parties du circuit qui ont été configurées pour l'exécution de l'algorithme en cours d'exécution sont reconfigurées.

6. Dispositif selon la revendication 4 ou 5,
**caractérisé en ce**
- **qu'**un nombre (x) est affecté à chacun des différents algorithmes qui peuvent être exécutés après un algorithme donné, ce nombre
- présentant à chaque fois une valeur initiale (x0) donnée,
- étant modifié d'une valeur donnée (+Δx) lorsque l'algorithme auquel est affecté le nombre concerné est exécuté après l'exécution de l'algorithme donné, et
- étant modifié d'une valeur donnée (-Δx) lorsque l'algorithme auquel est affecté le nombre concerné n'est pas exécuté après l'exécution de l'algorithme donné.

7. Dispositif selon la revendication 6, **caractérisé en ce que** la modification du nombre (x) est réalisée par des compteurs (21, 22, 23, 24, 25) d'incrémentation ou de décrémentation.

8. Dispositif selon la revendication 7, **caractérisé en ce que** les compteurs (21, 22, 23, 24, 25) n'incrémentent le nombre (x) que s'il est inférieur à une valeur maximale donnée.

9. Dispositif selon la revendication 7 ou 8, **caractérisé en ce que** les compteurs (21, 22, 23, 24, 25) ne décrémentent le nombre (x) que s'il est supérieur à une valeur minimale donnée.
